# EUROPÄISCHE PATENTSCHRIFT

(11) **EP 1 788 299 B1**
(45) Veröffentlichungstag und Bekanntmachung des Hinweises auf die Patenterteilung: **21.10.2009**
(21) Anmeldenummer: 05405652.8
(22) Anmeldetag: 22.11.2005
(51) Int. Cl.: F16M 11/14, F16C 11/10

(54) **Halterung für ein optisches Gerät**
Support for an optic device
Support pour un dispositif optique

(43) Veröffentlichungstag der Anmeldung: 23.05.2007
(73) Patentinhaber: Vogt, Philippe, 25000 Besancon (FR)
(72) Erfinder: Vogt, Philippe, 25000 Besancon (FR)
(74) Vertreter: Moser & Götze

(56) Entgegenhaltungen:
- WO-A-20/06087216
- DE-U1- 20 205 827
- FR-A- 1 310 611
- US-A- 4 886 230
- US-A- 5 590 870

## Beschreibung

Die Erfindung betrifft eine Halterung für ein optisches Gerät, enthaltend eine Gelenkkugel, eine Aufnahmevorrichtung für das optische Gerät und Mittel zum Feststellen der Aufnahmevorrichtung bezüglich der Gelenkkugel, welche Aufnahmevorrichtung zwei aneinander lösbar befestigte Ringe aufweist, die relativ zueinander verstellbar als auch beweglich auf der Gelenkkugel angeordnet sind und die Gelenkkugel gemeinsam umschliessen.

Aus der WO 20061087216 A1 ist eine Leuchte mit einem Strahler und einer verstellbaren Haltevorrichtung bekannt, durch die der Strahler mit einem Basisteil der Leuchte verbunden ist. Die Haltevorrichtung weist ein längliches Tragelement, ein Halteelement mindestens für einen Teil des Strahlers, ein Gelenk zwischen dem Tragelement und dem Halteelement sowie eine Klemmvorrichtung zur Arretierung des Gelenks auf. Das Gelenk und die Klemmvorrichtung sind in dem Strahlergehäuse angeordnet und im Strahlergehäuse ist ferner eine Lösevorrichtung angeordnet, mit der die Klemmklaff der Klemmvorrichtung verringerbar oder aufhebbar ist und die Lösevorrichtung zu ihrer manuellen Betätigung von außen des Strahlergehäuses her zugänglich ist. Die Lösevorrichtung erstreckt sich durch eine Öffnung im Strahlergehäuse und weist im Bereich der Öffnung ein manuell betätigbares Betätigungselement auf. In einem Abstand neben dem Betätigungselement ist ein gehäusefestes Stützelement angeordnet, wobei das Betätigungselement durch ein Übergreifen beider Elemente mit zwei Fingern einer Bedienungshand gegen das Stützelement bewegbar ist.

Aus der DE 202 05 827 U1 ist eine Halterung für einen Wandanbauteil, z. B. einen Beamer oder eine Beleuchtungsvorrichtung, bekannt. Die Halterung enthält eine Gelenkkugel mit einer Gewindebohrung zum lösbaren Befestigen eines Tragelementes für den Wandanbauteil, ein an einer Gebäudewand bzw. -decke montierbares, im Wesentlichen zylindrisches erstes Klemmelement und ein mit diesem verschraubtes, ringförmiges zweites Klemmelement. Hierzu weist das erste Klemmelement ein Aussengewinde, und das zweite Klemmelement ein hierzu korrespondierendes Innengewinde auf. Die Klemmelemente sind relativ zueinander zwischen einer die Gelenkkugel kraftschlüssig aufnehmenden Fixierposition und einer die Gelenkkugel drehbar aufnehmenden Löseposition verstellbar, in welcher das Tragelement für den Wandanbauteil schwenkbar gehalten ist und jeweils, durch manuelles oder werkzeugunterstütztes Festhalten des ersten Klemmelementes und ebensolches Drehen des zweiten Klemmelementes, in einer gewünschten Schwenkstellung fixiert wird.

Als nachteilig wird angesehen, dass die bekannte Halterung eine relativ aufwendige Handhabung beim Einstellen bzw. Verstellen der mit dem Wandanbauteil bestückten Gelenkkugel erfordert, da in der Löseposition der Klemmelemente die Gelenkkugel in der gewünschten Schwenkstellung gehalten, das erste Klemmelement festgehalten und zugleich das zweite Klemmelement gedreht werden muss, um die Schwenkstellung des Tragelementes zu fixieren.

Eine aus der EP 0 829 675 bekannte Halterung enthält eine feststehende Gelenkkugel, eine Brücke mit einer Breite, die geringer ist als der Kugeldurchmesser und die Kugel über ihren Halbmesser hinaus umgreift, und einen Griff mit Schraube und eine Rändelschraube zum Feststellen und zum Arretieren der Brücke auf der Gelenkkugel.

Die Nachteile dieser bekannten Halterung werden darin gesehen, dass die Kontaktfläche zwischen Gelenkkugel und Brücke begrenzt ist und dass die Feststellkraft in Richtung der Schraubenachse lediglich partiell auf die Gelenkkugel aufgebracht wird und dass die Gelenkkugel einen grösseren Durchmesser aufweist, um eine ausreichende Haltekraft zu erzielen, wodurch das Gewicht der Halterung beträchtlich ist und die Anwendung eingeschränkt wird.

Eine aus der FR-A-1 310 611 bekannte Haltevorrichtung enthält Gestängeelemente, die über Kugelgelenke relativ zueinander schwenkbar und feststellbar gekoppelt sind. Die Kugelgelenke enthalten je einen Kugelkopf, der mit einem der Gestängeelemente fest verbunden ist, einen am benachbarten Gestängeelement ausgebildeten oder mit diesem verbundenen Lagerflansch und einen auf den Lagerflansch aufsetzbaren Verschlussflansch, welche Flansche mit hohlkugelsegmentförmigen Lagerflächen ausgeführt sind, in denen der Kugelkopf drehbar gelagert ist. Der Verschlussflansch und der Lagerflansch sind mittels Schrauben miteinander bzw. mit einem Endabschnitt des benachbarten Gestängeelementes fest verbunden. Zum Blockieren des mit dem Gestängeelement verbundenen Kugelkopfes ist ein im Lagerflansch angeordnetes, an den Kugelkopf anlegbares Druckelement vorgesehen, welches durch eine im benachbarten Gestängeelement angeordnete Bohrung mit einem flüssigen oder gasförmigen Druckmittel beaufschlagt werden kann, um den Kugelkopf an die Lagerfläche des Verschlussflansches anzupressen.

Ein Nachteil dieser bekannten Halterung wird insbesondere darin gesehen, dass die zum Blockieren und Deblockieren des Kugelkopfes vorgesehene Einrichtung eine an die Bohrung des benachbarten Gestängeelementes anzuschliessende, relativ aufwendige Anordnung mit externen Aggregaten zum Speichern, Fördern und/oder Ablassen des hydraulischen bzw. gasförmigen Druckmittels erfordert, wodurch der Anwendungsbereich der Halterung entsprechend eingeschränkt wird.

Aus der US-A-4 886 230 ist eine Halterung für eine schwenkbar angeordnete Mittelsäule eines Stativs bekannt. Die Halterung enthält eine Gelenkkugel, die mit der Mittelsäule verbunden ist, einen Lagerblock mit einer die Gelenkkugel lose aufnehmenden Bohrung, einen im Lagerblock beweglich angeordneten hydraulischen Kolben mit einer an den unteren Endabschnitt der Gelenkkugel angepassten Gleitfläche zum Abstützen der Gelenkkugel und einen in der Bohrung des Lagerblocks befestigten Lagerring mit einer an einen oberen Endabschnitt der Gelenkkugel angepassten Gleitfläche. Der Kolben ist mittels einer Tellerfeder gegen die Gelenkkugel mit einer Federkraft vorgespannt, die so bemessen ist, dass die Gelenkkugel an die Gleitfläche des Lagerringes mit einer Grundfriktion angedrückt wird und innerhalb eines bestimmten Schwenkbereichs der Mittelsäule beweglich gelagert ist. Zum Feststellen der Gelenkkugel ist ein im Lagerblock ausgebildeter, der Unterseite des Kolbens zugeordneter hydraulischer Mechanismus vorgesehen, mittels welchem, durch Druckbeaufschlagung des Kolbens, die Gelenkkugel und die damit verbundene Mittelsäule in der jeweils gewünschten Schwenkposition blockiert werden können.

Die Nachteile dieser bekannten Halterung werden insbesondere darin gesehen, dass die durch den hydraulischen Kolben zu übertragende Haltekraft lediglich partiell in die Gelenkkugel eingeleitet wird und dass, aufgrund der Anordnung der Gelenkkugel und des Lagerringes in der Bohrung des Lagerblocks, die Kontaktflächen zwischen der Gelenkkugel und dem Kolben bzw. dem Lagerring eng begrenzt sind, wodurch die zusammenwirkenden Teile relativ hoch beansprucht werden und die Anwendung der Halterung eingeschränkt wird.

Es ist die Aufgabe der Erfindung, eine verbesserte Halterung der eingangs genannten Art zu schaffen, bei der die vorstehend genannten Nachteile nicht auftreten.

Diese Aufgabe wird erfindungsgemäß durch die Halterungen der Ansprüche 1, 3 und 4 gelöst.

Durch die erfindungsgemäßen Lösungen werden durch die Aufnahmevorrichtung radiale Haltekräfte großflächig auf die Gelenkkugel ausgeübt. Dadurch wird mit einer relativ kleinen Gelenkkugel eine kompakte Halterung mit gegenüber den bekannten Ausführungen reduziertem Gewicht geschaffen, die vielseitig einsetzbar ist. Vorteilhafte Ausführungsformen sind in der Beschreibung, den Ansprüchen und den Zeichnungen beschrieben bzw. dargestellt.

Es ist von Vorteil, wenn die Gelenkkugel und die Ringe aus einem Material, ausgewählt aus der Gruppe Metall, Kunststoff, laminiertes Holz oder einer Kombination davon bestehen.

Erfindungsgemäß sind die Ringe an Führungen verschiebbar geführt, die bzw. jede Spanneinheit enthält einen ersten und einen zweiten Zahnradtrieb, und als Betätigungsorgan ist ein Zahnkranz zum Drehen der Zahnradtriebe vorgesehen. Auf diese Weise ist es möglich, mit Hilfe der Zahnradtriebe eine Grundfriktion oder eine Haltekraft vollflächig auf die Gelenkkugel aufzubringen.

Nach einer zweiten Ausführungsform weist die Halterung lediglich eine Spanneinheit und zwei auf dem Umkreis in den Ringen befestigte Spannelemente auf. Auf diese Weise kann eine vereinfachte und kostengünstige Aufnahmevorrichtung erzielt werden.

Es ist von Vorteil, wenn für die Gelenkkugel ein Halter vorgesehen ist, der ein Stehlager mit einer Achse, die mit der Gelenkkugel verbindbar ist, und Feststellmittel für die Achse und die Gelenkkugel aufweist, das Ganze derart, dass die Gelenkkugel um die optische Achse drehbar und mit der Achse schwenkbar ist und eine flexible Einstellung erreicht werden kann.

Nachfolgend wir die Erfindung rein beispielhaft anhand eines Stativkopfes und unter Bezugnahme auf die beiliegenden Zeichnungen beschrieben.

Es zeigen:
Fig.1 eine Ansicht eines Stativkopfes,
Fig.2 eine Draufsicht einer ersten Ausführungsform einer Kameraaufnahmeeinrichtung,
Fig.3 einen Schnitt entlang der Linie I - I in Fig.2,
Fig.4 einen Schnitt entlang der Linie II - II in Fig.2,
Fig.5 eine erste Ausführungsform einer Einrichtung zum Feststellen der Kameraaufnahmevorrichtung in räumlicher Darstellung,
Fig.6 eine zweite Ausführungsform der Kameraaufnahmevorrichtung im Schnitt analog zum Schnitt entlang der II - II in Fig.3,
Fig.7 eine Draufsicht analog zu Fig.2 einer modifizierten Kameraaufnahmeeinrichtung,
Fig.8 eine erste Ausführungsform eines Halters für die Gelenkkugel in räumlicher Darstellung,
Fig.9 eine zweite Ausführungsform eines Halters und
Fig.10 eine Ausführungsform einer Panoramavorrichtung im Schnitt.

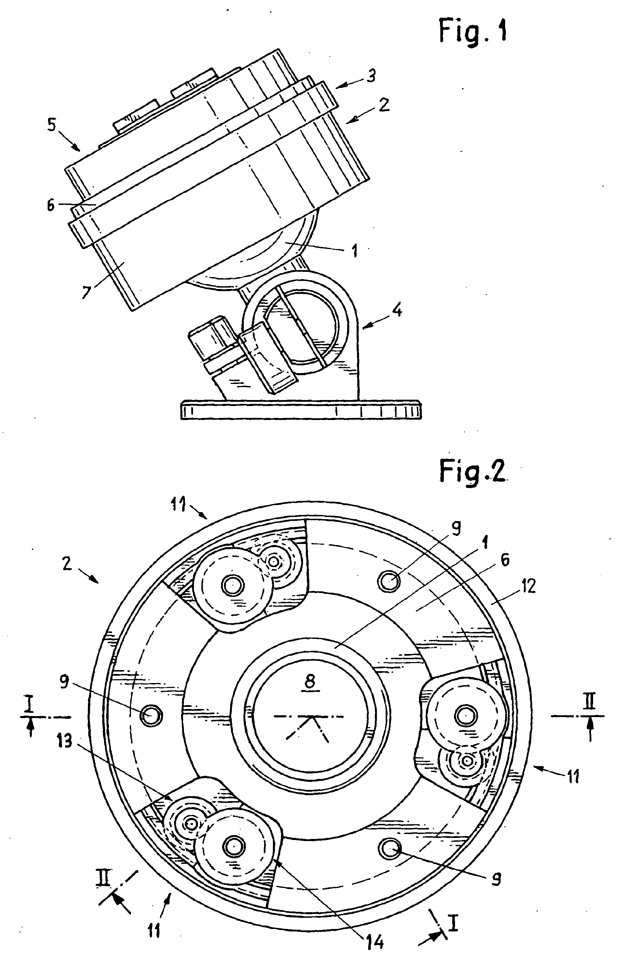

Wie die Fig.1 zeigt besteht der Stativkopf im wesentlichen aus einer Gelenkkugel 1, einer Aufnahmeeinrichtung 2 für eine Kamera, einer Einrichtung 3 zum Feststellen der Aufnahmeeinrichtung 2 an der Gelenkkugel 1, einem Halter 4 für die Gelenkkugel 1 und einer Panoramaeinrichtung 5.

Es wird auf die Figuren 2 bis 5 Bezug genommen, welche eine erste Ausführungsform der Aufnahmevorrichtung zeigen.

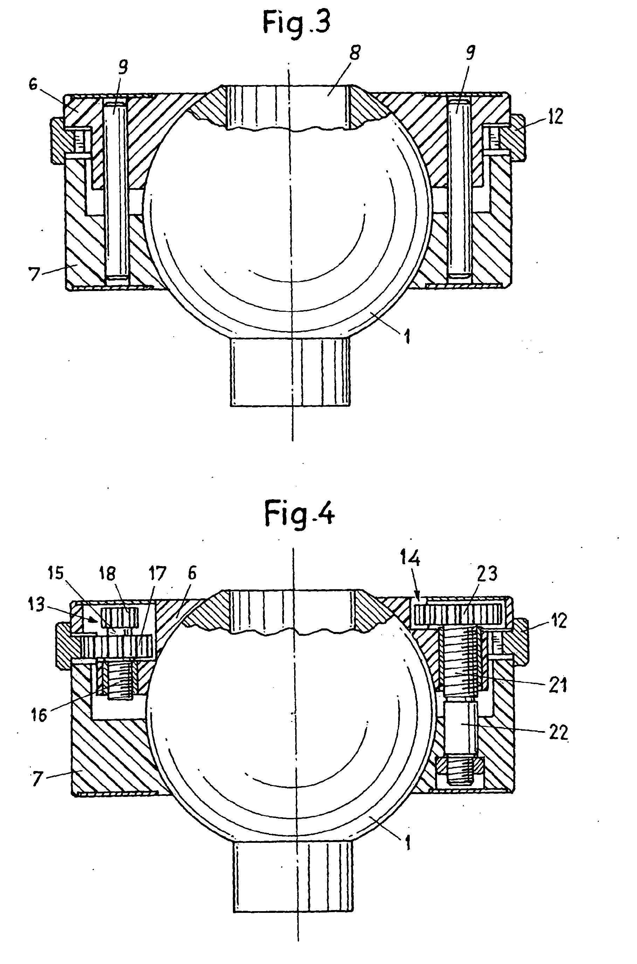

Die Aufnahmeeinrichtung 2 enthält einen ersten und zweiten Ring 6 und 7 mit einer an die Kontur der Gelenkkugel 1 angepassten Gleitfläche und drei Führungsorgane 9 für die Ringe 6 und 7, die auf einem Umkreis gleichmäßig verteilt angeordnet sind. Die Gelenkkugel 1 kann aus Metall, Kunststoff oder laminierten Holz bestehen und ist mit einer Blindbohrung 8 versehen, und die Ringe können aus einem Material ausgewählt aus der Gruppe Metall, Kunststoff oder laminiertes Holz bestehen, um das Gewicht zu reduzieren (Fig. 3).

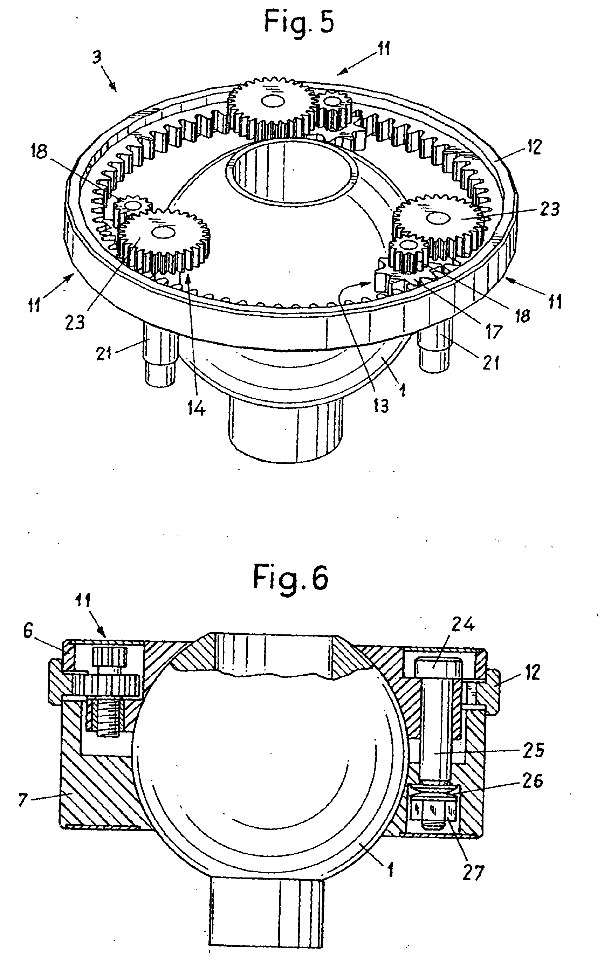

Die Einrichtung 3 zum Feststellen verbindet die Ringe 6 und 7 und umfasst drei Spanneinheiten 11, die auf dem Umkreis gleichmäßig verteilt angeordnet sind und einen Zahnkranz 12 zum Betätigen der Spanneinheiten 11. Die Spanneinheit 11 umfasst einen ersten Zahnradtrieb 13, der mit dem Zahnkranz 12 kämmt und einen zweiten Zahnradtrieb 14, der mit dem ersten Zahnradtrieb 13 kämmt. Der erste Zahnradtrieb 13 besteht aus einer Achse 15 mit einem Gewindeabschnitt 16, der in einer Gewindebohrung im ersten Ring 6 eingeschraubt ist, einem ersten Zahnrad 17 mit höheren Zähnezahl und einem zweiten Zahnrad 18 mit einer niedrigeren Zähnezahl, die übereinander an der Achse 15 befestigt sind. Der zweite Zahnradtrieb 14 besteht aus einer Achse 21 mit einem Gewindeabschnitt, der in den ersten Ring 6 eingeschraubt ist und einem zylindrischen Abschnitt 22, der im zweiten Ring 7 gehalten ist, und einem Zahnrad 23, das an der Achse 21 befestigt ist (Fig.4 und 5).

Die Fig.6 zeigt eine zweite Ausführungsform die sich von der Ausführungsform nach den Figuren 2 bis 5 durch die Ausbildung der Einrichtung zum Feststellen der Ringe unterscheidet. Wie aus der Fig.6 ersichtlich ist weist die Feststelleinrichtung 3 eine Spanneinheit 11 mit einem ersten und zweiten Zahnradtrieb 13,14 und zwei Spannelemente 24 auf. Das Spannelement enthält einen Stab 25, der im ersten und zweiten Ring angeordnet ist, Tellerfedern 26, die auf dem Stab angeordnet sind, und eine Sechskantmutter 27.

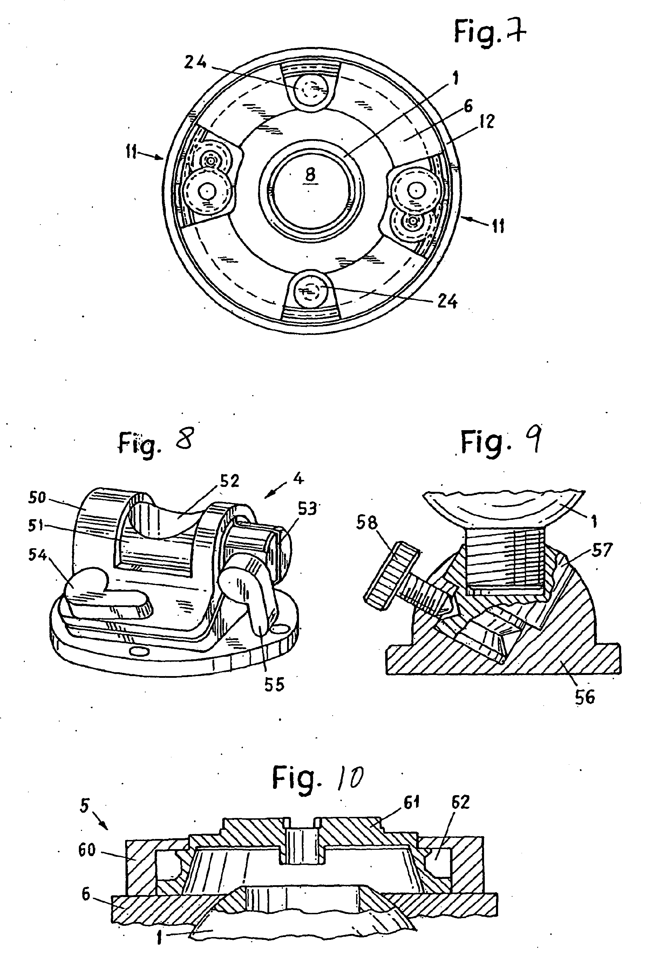

Die Fig.7 zeigt eine modifizierte Ausführungsform der Aufnahmevorrichtung die sich von der Ausführungsform nach Fig.6 dadurch unterscheidet, dass die Feststelleinrichtung 3 zwei Spanneinheiten 11 und zwei Spannelemente 24 aufweist.

Wie die Fig.8 zeigt enthält der Halter 4 ein Stehlager 50 und eine Achse 51. Das Stehlager ist einseitig geschlitzt. Die Achse 51 enthält ein Durchgangsloch 52, das rechtwinklig zur Drehachse angeordnet ist, und einen Schlitz 53, der sich von einem Ende der Achse 51 bis zum Durchgangsloch 52 erstreckt. Ferner ist der Halter 4 mit einem Hebel 54 zum Feststellen der Achse im Stehlager und einem Hebel 55 versehenen, um die Gelenkkugel in der Achse festzustellen.

Die Fig.9 zeigt eine zweite Ausführungsform des Haltes. Der Halter weist einen Träger 56 mit einer Blindbohrung, die bezüglich der Halterbasis geneigt angeordnet ist, ein Anschlussteil 57 mit einer Gewindebohrung für die Gelenkkugel 1, der in der Blindbohrung drehbar angeordnet ist, und eine Schraube 58 zum Feststellen des Anschlussteils.

Wie die Fig.10 zeigt weist die Panoramavorrichtung 5 einen Ring 60 mit einem L -förmigen Querschnitt, der mit dem ersten Ring 6 verbunden ist, ein Aufnahmeorgan 61 für einen nicht dargestellten Kamerahalter, das drehbar im Ring 60 angeordnet ist und ein Feststellorgan 62 für das Aufnahmeorgan auf.

## Patentansprüche

1. Halterung für ein optisches Gerät, enthaltend eine Gelenkkugel(1), eine Aufnahmevorrichtung (2) für das optisches Gerät und Mittel zum Feststellen der Aufnahmevorrichtung an der Gelenkkugel (1), wobei die Aufnahmevorrichtung (2) zwei Ringe (6,7) aufweist, die zueinander verschiebbar als auch beweglich auf der Gelenkkugel(1) angeordnet sind und die Gelenkkugel gemeinsam umschließen, und wobei eine Feststelleinrichtung (3) zwischen den Ringen angeordnet ist und diese verbindet, das Ganze derart, dass die Ringe gleichzeitig und gemeinsam bewegt werden, und **dadurch gekennzeichnet, dass** die Ringe (6,7) an Führungen (9) geführt sind und dass die Einrichtung (3) zum Feststellen der Ringe (6,7) Spanneinheiten (11), die einen ersten und zweiten Zahnradtrieb (13,14) enthalten und auf einem Umkreis in den Ringen angeordnet sind, und einen Zahnkranz (12) zum Drehen der Zahnradtriebe aufweist.

2. Halterung nach Anspruch 1, **dadurch gekennzeichnet, dass** die Einrichtung (3) zum Feststellen drei Spanneinheiten (11) aufweist, die gleichmäßig auf dem Umkreis verteilt sind.

3. Halterung für ein optisches Gerät, enthaltend eine Gelenkkugel(1), eine Aufnahmevorrichtung (2) für das optisches Gerät und Mittel zum Feststellen der Aufnahmevorrichtung an der Gelenkkugel (1), wobei die Aufnahmevorrichtung (2) zwei Ringe (6,7) aufweist, die zueinander verschiebbar als auch beweglich auf der Gelenkkugel (1) angeordnet sind und die Gelenkkugel gemeinsam umschließen, und wobei eine Feststelleinrichtung (3) zwischen den Ringen angeordnet ist und diese verbindet, das Ganze derart, dass die Ringe gleichzeitig und gemeinsam bewegt werden, und **dadurch gekennzeichnet, dass** die Ringe (6,7) an führenden Spannelemente (24) geführt sind, dass die Einrichtung (3) zum Feststellen der Ringe (6) eine Spanneinheit (11) mit einem ersten und zweiten Zahnradtrieb (13, 14) enthält und auf einem Umkreis in den Ringen angeordnet ist, und einen Zahnkranz (12) zum Drehen des Zahnradtriebes (13, 14) und zwei führenden Spannelemente (24) aufweist.

4. Halterung für ein optisches Gerät, enthaltend eine Gelenkkugel (1), eine Aufnahmevorrichtung (2) für das optisches Gerät und Mittel zum Feststellen der Aufnahmevorrichtung an der Gelenkkugel (1),wobei die Aufnahmevorrichtung (2) zwei Ringe (6,7) aufweist, die zueinander verschiebbar als auch beweglich auf der Gelenkkugel (1) angeordnet sind und die Gelenkkugel gemeinsam umschließen, und wobei eine Feststelleinrichtung (3) zwischen den Ringen angeordnet ist und diese verbindet, das Ganze derart, dass die Ringe gleichzeitig und gemeinsam bewegt werden, und **dadurch gekennzeichnet, dass** die Ringe (6,7) an führenden Spannelemente (24) geführt sind und dass die Einrichtung (3) zum Feststellen der Ringe (6,7) Spanneinheiten (11), die einen ersten und zweiten Zahnradtrieb (13,14) enthalten und auf einem Umkreis in den Ringen angeordnet sind, und einen Zahnkranz (12) zum Drehen der Zahnradtriebe aufweist, und dass die Einrichtung (3) zum Feststellen der Ringe (6) zwei Spanneinheiten (11) und zwei führenden Spannelemente (24) aufweist.

## Claims

1. Mounting for an optical device, comprising a ball part (1) of a joint, a holding device (2) for the optical device and means for locking the holding device to the ball part (1) of the joint, the holding device (2) having two rings (6, 7) which are arranged to be displaceable relative to one another and also movable on the ball part (1) of the joint and which together enclose the ball part of the joint, and a locking arrangement (3) being arranged between the rings and connecting them, the whole being such that the rings are moved simultaneously and in unison, and **characterised in that** the rings (6, 7) are guided on guides (9) and **in that** the arrangement (3) for locking the rings (6, 7) has clamping units (11) which comprise a first and a second gear-operated drive (13, 14) and which are arranged on a circumferential line in the rings, and has a ring gear (12) for turning the gear-operated drives.

2. Mounting according to claim 1, **characterised in that** the arrangement (3) for locking has three clamping units (11) which are evenly distributed around the circumferential line.

3. Mounting for an optical device, comprising a ball part (1) of a joint, a holding device (2) for the optical device and means for locking the holding device to the ball part (1) of the joint, the holding device (2) having two rings (6, 7) which are arranged to be displaceable relative to one another and also movable on the ball part (1) of the joint and which together enclose the ball part of the joint, and a locking arrangement (3) being arranged between the rings and connecting them, the whole being such that the rings are moved simultaneously and in unison, and **characterised in that** the rings (6, 7) are guided on guiding clamping members (24) and **in that** the arrangement (3) for locking the rings (6, 7) comprises one clamping unit (11) having a first and a second gear-operated drive (13, 14) and is arranged on a circumferential line in the rings and has a ring gear (12) for turning the gear-operated drive (13, 14) and two guiding clamping members (24).

4. Mounting for an optical device, comprising a ball part (1) of a joint, a holding device (2) for the optical device and means for locking the holding device to the ball part (1) of the joint, the holding device (2) having two rings (6, 7) which are arranged to be displaceable relative to one another and also movable on the ball part (1) of the joint and which together enclose the ball part of the joint, and a locking arrangement (3) being arranged between the rings and connecting them, the whole being such that the rings are moved simultaneously and in unison, and **characterised in that** the rings (6, 7) are guided on guiding clamping members (24) and **in that** the arrangement (3) for locking the rings (6, 7) has clamping units (11) which comprise a first and a second gear-operated drive (13, 14) and which are arranged on a circumferential line in the rings, and has a ring gear (12) for turning the gear-operated drives, and **in that** the arrangement (3) for locking the rings (6) has two clamping units (11) and two guiding clamping members (24).

## Revendications

1. Support pour appareil optique, comprenant une articulation à rotule (1), un dispositif de réception (2) destiné à l'appareil optique et des moyens de fixation du dispositif de réception à l'articulation à rotule (1), le dispositif de réception (2) comportant deux bagues (6, 7) qui sont disposées de façon à pouvoir coulisser l'une par rapport à l'autre et également de façon à pouvoir se déplacer sur l'articulation à rotule (1) et qui enferment conjointement l'articulation à rotule, et un dispositif de fixation (3) étant disposé entre les bagues et reliant celles-ci, et ce de façon à déplacer les bagues (6, 7) simultanément et conjointement, et **caractérisé en ce que** les bagues (6, 7) sont guidées sur des guides (9) et **en ce que** le dispositif (3) de fixation des bagues (6, 7) comporte des unités de serrage (11), qui contiennent des première et seconde roues dentées d'entraînement (13, 14) et qui sont disposées sur un cercle situé dans les bagues, et une couronne dentée (12) destinée à faire tourner les roues dentées d'entraînement.

2. Support selon la revendication 1, **caractérisé en ce que** le dispositif de fixation (3) comporte trois unités de serrage (11) qui sont réparties uniformément sur le cercle.

3. Support pour appareil optique, comprenant une articulation à rotule (1), un dispositif de réception (2) destiné à l'appareil optique et des moyens de fixation du dispositif de réception à l'articulation à rotule (1), le dispositif de réception (2) comportant deux bagues (6, 7) qui sont disposées de façon à pouvoir coulisser l'une par rapport à l'autre et également de façon à pouvoir se déplacer sur l'articulation à rotule (1) et qui enferment conjointement l'articulation à rotule, et un dispositif de fixation (3) étant disposé entre les bagues et reliant celles-ci, et ce de façon à déplacer les bagues simultanément et conjointement, et **caractérisé en ce que** les bagues (6, 7) sont guidées sur des éléments de serrage et de guidage (24), **en ce que** le dispositif (3) de fixation des bagues (6) comporte une unité de serrage (11) dotée de première et seconde roues dentées d'entraînement (13, 14) et est disposé sur un cercle situé dans les bagues, et une couronne dentée (12) destinée à faire tourner les roues dentées d'entraînement (13, 14) et deux éléments de serrage et de guidage (24).

4. Support pour appareil optique, comprenant une articulation à rotule (1), un dispositif de réception (2) destiné à l'appareil optique et des moyens de fixation du dispositif de réception à l'articulation à rotule (1), le dispositif de réception (2) comportant deux bagues (6, 7) qui sont disposées de façon à pouvoir coulisser l'une par rapport à l'autre et également de façon à pouvoir se déplacer sur l'articulation à rotule (1) et qui enferment conjointement l'articulation à rotule, et un dispositif de fixation (3) étant disposé entre les bagues et reliant celles-ci, et ce de façon à déplacer les bagues simultanément et conjointement, et **caractérisé en ce que** les bagues (6, 7) sont guidées sur des éléments de serrage et de guidage (24), et **en ce que** le dispositif (3) de fixation des bagues (6, 7) comporte des unités de serrage (11), qui comprennent des première et seconde roues dentées d'entraînement (13, 14) et qui sont disposées sur un cercle dans les bagues, et une couronne dentée (12) destinée à faire tourner les roues dentées d'entraînement (13, 14), et **en ce que** le dispositif (3) de fixation des bagues (6) comporte deux unités de serrage (11) et deux éléments de serrage et de guidage (24).
